# EUROPÄISCHE PATENTANMELDUNG

(11) **EP 0 620 037 A2**
(43) Veröffentlichungstag der Anmeldung: **19.10.1994**
(21) Anmeldenummer: 94250092.7
(22) Anmeldetag: 14.04.1994
(51) Int. Cl.: B01D 53/34, B01D 53/36

(54) **Verfahren und Vorrichtung zum Reinigen von Luft**

(30) Priorität: 16.04.1993 DE 4312511; 16.12.1993 DE 4343607
(71) Anmelder: Michailow, Alexander, D-49078 Osnabrück (DE)
(72) Erfinder: Michailow, Alexander, D-49078 Osnabrück (DE)
(74) Vertreter: Lüke, Dierck-Wilm, Dipl.-Ing.

(57) **Zusammenfassung**

Verfahren und Vorrichtung zum Reinigen von Luft, wobei verunreinigte Luft mit einer in Abhängigkeit von den zu entfernenden Kontaminanten reaktiven Flüssigkeit und/oder mit oxidierenden Gasanteilen sowie mit Katalysatoren in Kontakt gebracht wird.

Reinigung der Luft, insbesondere von Schadstoffen aus den Gruppen Kohlenwasserstoffe, Alkohole, Aldehyde, Säuren und Säureanhydride, Ester, Halogen-Kohlenwasserstoffverbindungen, anorganische und organische Gase, wobei die verunreinigte Luft über Verteilersiebe (11) durch eine Schüttung (10) aus speziellen Zeolithgranulaten geleitet wird, in die ein geregeltes Gemisch aus Wasserstoffperoxid und entsalzenem Wasser eingespeist wird, wobei aus den Zeolithgranulaten Wasserstoffperoxid und radikaler Sauerstoff ausgegast wird und zur verstärkten Oxidation der Schadstoffanteile in der Luft führt.

## Beschreibung

Die Erfindung betrifft ein Verfahren sowie eine Vorrichtung zum Reinigen von Luft gemäß den Oberbegriffen der Ansprüche 1 und 12.

Verfahren zum Reinigen von mit Kontaminanten belasteter Luft sind bekannt. In der EP 0 496 913 A1 wird ein Verfahren zur Rauchgasreinigung beschrieben, nach dem die sauren Bestandteile ausgewaschen und durch basische Medien neutralisiert werden. Es wird auch vorgeschlagen, den Rauchgasen Ammoniak gasförmig oder in Wasser gelöst zuzuführen oder das Rauchgas durch Adsorbentien zu leiten. Dieses Verfahren ist jedoch auf vorzugsweise Müllverbrennungsanlagen beschränkt, bei denen hauptsächlich Stickoxide in unschädliche Produkte umgesetzt und die Entstehung von Dioxinen oder Furanen vermindert werden sollen.

In der EP 0 504 131 A1 wird ein zweistufiges Verfahren dieser Art beschrieben, bei dem in einer ersten Verfahrensstufe die Schadstoffe, insbesondere aus der Gruppe Stickoxide, durch intensives Inkontaktbringen mit Ammoniak und mit ionenaustauschfähigem, anorganischem Struktur-Material, insbesondere mit natürlichem Zeolith, in unschädliche Stoffe umgesetzt werden. In einer zweiten Verfahrensstufe werden die Stoffe einem Oxidationsprozeß unterzogen. Auch dieses Verfahren ist auf die Umsetzung von Stickoxiden beschränkt und zudem durch die erforderlichen hohen Temperaturen sehr kostenintensiv.

Andere gattungsgemäße Verfahren führen dazu, daß die Kontaminanten zwar einerseits der Luft entzogen werden, andererseits jedoch in der Reinigungsflüssigkeit angereichert werden. Es findet also eine Verlagerung der Verunreinigungen, häufig Kohlenwasserstoffverbindungen, statt, die etwa mit der Luftreinigung in Filtern, beispielsweise in Aktivkohle- oder Faltenfilterelementen gleichzusetzen ist.

Weiterhin existieren Luftreinigungsverfahren beispielsweise durch Nachverbrennung des Abluftvolumens oder durch biologische Reinigung der Abluft.

Alle diese Lösungen sind sowohl in der Anschaffung als auch in den Betriebskosten sehr kostenträchtig und schaffen teilweise neue Entsorgungsprobleme.

Der Erfindung liegt von daher die Aufgabe zugrunde, ein gattungsgemäßes Verfahren dahingehend zu verbessern, daß eine preiswerte und hochwirksame Reinigung der Luft, insbesondere von Schadstoffen aus den Gruppen Kohlenwasserstoffe, Alkohole, Aldehyde, Säuren und Säureanhydride, Ester, Halogen-Kohlenwasserstoffverbindungen, anorganische und organische Gase, ermöglicht wird, so daß auch die nationalen Auflagen der Umweltbehörden erfüllt werden, sowie eine geeignete Vorrichtung zu schaffen.

Die Lösung dieser Aufgabe ergibt sich aus den kennzeichnenden Merkmalen der Ansprüche 1 und 12.

Die Kontaminanten werden nicht gesammelt und in ein anderes Medium überführt, sondern sie werden zerstört oder aufgebrochen, und anschließend umgewandelt. Auf diese Weise wird ein Rückstand an Substanzen nahezu völlig vermieden. Darüber hinaus ist das Verfahren sowohl in der Anschaffung als auch im Unterhalt sehr kostengünstig. Insbesondere Lösungsmittel, wie sie bei lackverarbeitenden Unternehmen anfallen, können nahezu vollständig umgewandelt und auf diese Weise entfernt werden. Es wird ein hoher Reinheitsgrad der aufbereiteten Luft erreicht, der weit über die bestehenden Normen hinausgeht.

Weitere vorteilhafte Ausgestaltungen der Erfindung ergeben sich aus den Unteransprüchen.

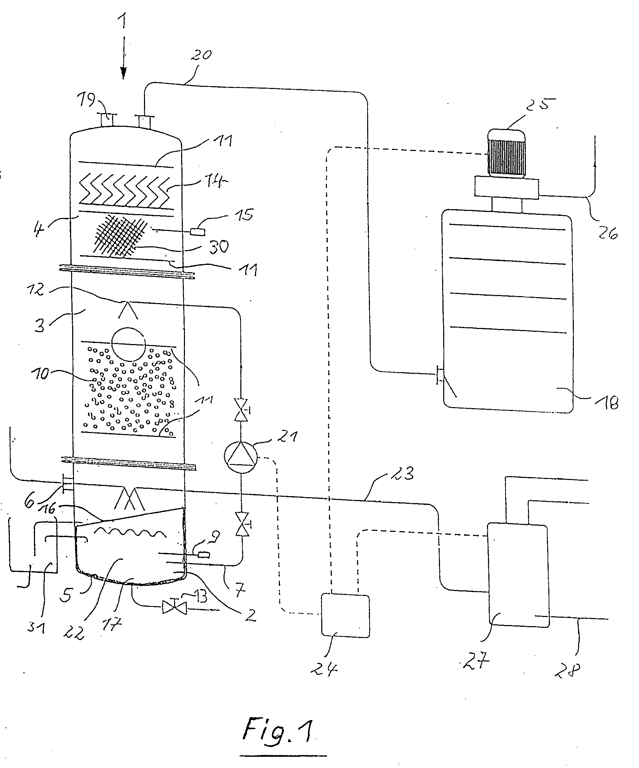

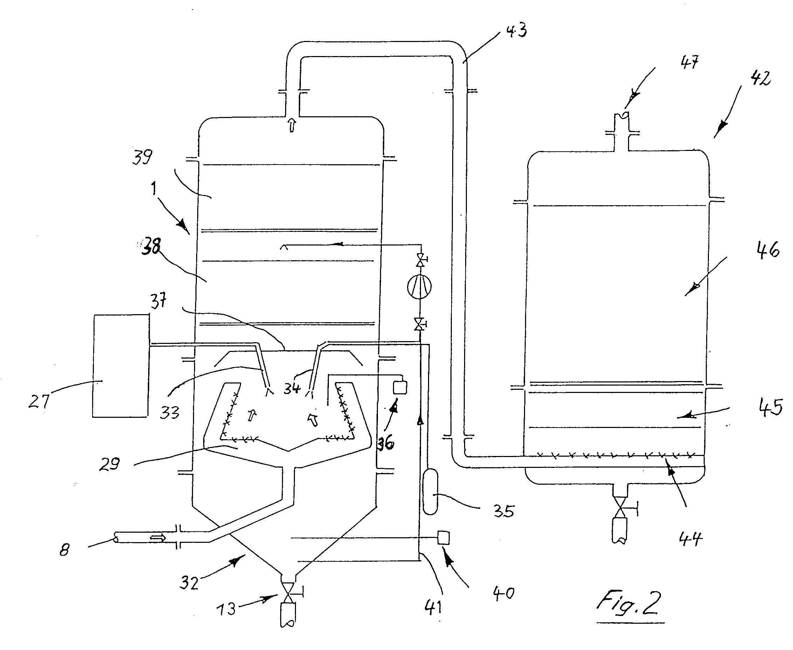

Die Erfindung ist nachfolgend anhand von Ausführungsbeispielen für Vorrichtungen zum Reinigen von Luft näher erläutert. Die dazugehörigen Fig.1,2 zeigen das jeweilige Fließschema einer Luftreinigunganlage.

Die Luftreinigungsanlage nach der Fig.1 zur Durchführung des erfindungsgemäßen Verfahrens besteht aus einem beheizbaren Reaktionsbehälter 1, der im wesentlichen aus drei Hauptbereichen 2,3,4 gebildet ist, und aus einer nachgeordneten Filteranlage 18. Der untere Bereich 2 des Reaktionsbehälters 1 ist mit einer speziellen Auskleidung 5 aus hochreinem Nickel, ohne Chrombestandteile und/oder aus einer keramischen Substanz, um chemische Reaktionen z.B. mit Wasserstoffperoxid zu vermeiden und um die chemische Sauberkeit einer darin befindlichen wäßrigen Lösung 22 und damit den Ablauf einer kontrollierbaren chemischen Reaktion zu sichern, versehen. In den unteren Bereich 2 des Reaktionsbehälters 1 münden eine Saugleitung 6 für das zu reinigende Rohgas, eine Ansaugleitung 7 für die Zuführung der wäßrigen Lösung 22 zu einem Düsenstock 12, eine Abschleusung 13 am unteren Schlammfangboden 17, ein Überlauf zu einem Schlammfangbecken 31 sowie eine Leitung 23. Im unteren Bereich 2 des Reaktionsbehälters 1 befinden sich ein Verteilerboden 16 und eine Heizeinrichtung 9. Auf den unteren Bereich 2 des Reaktionsbehälters 1 ist ein Edelstahlbehälter (Werkstoff 1.4571) als mittlerer Bereich 3 angeflanscht, in dem Füllkörper 10 auf einem Siebblech 11 aufgeschüttet sind, über die der Düsenstock 12 angeordnet ist. Auf den mittleren Bereich 3 ist ein weiterer Behälter aus Edelstahl als oberer Bereich 4 angeflanscht, der einen Tropfenabscheideraum 14, eine Heizeinrichtung 15 und eine Schüttung 30 auf Siebböden 11 enthält. An diesen oberen Bereich 4 sind ein Füllstutzen 19 und eine Leitung 20 zu der Filteranlage 18 montiert.

Die mit Schadstoffen beladene Luft wird über die Saugleitung 6 in den unteren Bereich 2 des Reaktionsgefäßes 1 eingeleitet, wo sie über den Verteilerboden 16 sehr fein mit den über die Leitung 23 zugeführten Ozongasanteilen zu einem homogenen Gasgemisch verwirbelt wird.

Das Ozon wird in einem Ozongaserzeuger 27 aus über die Leitung 28 zugeleitetem Sauerstoff hergestellt. Die Steuereinrichtung 24 überwacht die Zusammensetzung des Gasgemisches aus schadstoffbeladener Luft, Ozon und Sauerstoff im unteren Bereich 2 des Reaktionsgefäßes 1 und stellt über entsprechende Dosiereinrichtungen in den jeweiligen Zuleitungen 6,23 die optimale Zusammensetzung des Gasgemisches ein.

Die Anwendung von Ozon als Oxidationsmittel erfolgt vorzugsweise als ein Luft- oder Sauerstoff-Ozon-Gemisch, welches in den Luftstrom eingebracht wird. Dabei kann das Gas die wäßrige Lösung 22 im unteren Bereich 2 des Reaktionsgefäßes 1 von unten durchströmen oder im Gegenstrom zu der wäßrigen Lösung 22 geführt werden, wobei die wäßrige Lösung 22 als Reaktionsflüssigkeit verdüst, versprüht oder vernebelt wird. Die wäßrige Lösung 22 kann neutral, sauer oder basisch sein. Erfindungsgemäß besteht die wäßrige Lösung 22 aus Wasserstoffperoxid und entsalzenem Wasser oder aus einem Alkalimetallperoxid, wie z.B. Natriumchlorit, Natriumperborat, Natriumcarborat, Dioxon 104. Der Boden des unteren Bereiches 2 des Reaktionsgefäßes 1 ist als Schlammfangboden 17 ausgebildet, von dem eventuelle Schlammanteile über die Abschleusung 13 entfernt werden können. Im Bereich der wäßrigen Lösung 22 ist das Reaktionsgefäß 1 mit der Auskleidung 5 aus reinem Nickel und/oder aus einer keramischen Substanz ausgestattet, um eine Ausgasung bzw. chemische Reaktion zu verhindern, und somit eine stabile chemische Reaktion zu gewährleisten. Eine Übersalzung der wäßrigen Lösung 22 würde z.B. die Funktion der ausgegasten Wasserstoffperoxidanteile beeinträchtigen.

Die beruhigten Luftströme werden durch die Saugwirkung eines Ventilators 25 durch die nachgeschalteten Füllkörper 10, die in Kolonnen auf dem Siebblech 11 aufgeschüttet sind, gesaugt. Mittels des oberhalb der Füllkörper 10 angeordneten Düsenstocks 12 werden die Füllkörper 10 ständig mit der wäßrigen Lösung 22 berieselt und von einem zudosierten Gemisch aus Ozon und Sauerstoff umgeben. Die Sprühdüsen des Düsenstocks 12 werden über eine Kreiselpumpe 21, die im Umwälzverfahren arbeitet, beschickt. Die schadstoffbelasteten Luftvolumen haben hier einen großflächigen unmittelbaren Kontakt mit der wäßrigen Lösung 22 und mit den Ozongasanteilen sowie mit den Füllkörperoberflächen. Das aus den Füllkörpern 10, z.B. Zeolithgranulat, ausgasende Wasserstoffperoxid bewirkt zusammen mit den Ozongasanteilen eine schnelle unmittelbare Reaktion und eine Umwandlung der Schadstoffe. Wenn die Schadstoffe im Luftvolumen flüchtige Lösungsmittel der Kohlenwasserstoffgruppe, z.B. Isopropanol, sind, dann werden die unschädlichen Stoffe Essigsäure, CO₂, H₂ gebildet.

Die Luftvolumen strömen in diesem mittleren Bereich 3 des Reaktionsgefäßes 1 vorzugsweise mit einer Geschwindigkeit von maximal 1,3 m/s durch die Füllkörper 10. Nach dem Durchströmen der Füllkörper 10 werden die Luftströme durch den Düsenstockraum zum oberen Bereich 4 des Reaktionsgefäßes 1 in den Tropfenabscheideraum 14 gesaugt.

Nach dem Durchströmen des Reaktionsgefäßes 1 sind die Luftvolumen weitestgehend von Schadstoffanteilen gereinigt und aufbereitet.

Die kontaminierte Abluft kann auch ohne die vorherige Aufbrechung der Kontaminanten über ein Oxidationsverfahren gereinigt werden. Hierzu wird die kontaminierte Luft lediglich durch die aus Zeolithgranulaten gebildeten Füllkörper 10 hindurchgeleitet. In die Schüttung der Füllkörper 10 wird über den Düsenstock 12 ein Gemisch aus Wasserstoffperoxid und Ozongasen eingedüst. In diesem Fall ergeben sich kürzere Standzeiten für das Zeolithgranulat, da der Sättigungsgrad der beispielsweise Zeolith-Kalk-Granulate durch Absorption in kürzerer Zeit erreicht wird. Die Zeolith-Kalk-Granulate können durch einfaches Auswaschen mit heißem Wasser oder mittels gespanntem Dampf regeneriert werden.

Eventuell noch vorhandene Restanteile von Schadstoffen werden in der über eine Leitung 20 nachgeschalteten Filteranlage 18 vollständig beseitigt. Die Filteranlage 18 kann eine Ab- und/oder Adsorbtionsstrecke sein. Im dargestellten Beispiel ist dem Reaktionsgefäß 1 die Filteranlage 18, bestehend aus einem Aktivkohlefilter und/oder einem Braunkohlenkoksfilter, nachgeschaltet. Aus Sicherheitsgründen wird dadurch im Störfall eine Verunreinigung der Atmosphäre verhindert. Die Luft kann nach dem Durchlaufen der Filteranlage 18 den Betriebsräumen über eine Reingasleitung 26 wieder zugeführt werden.

Die Granulatschüttungen, gebildet aus den Füllkörpern 10, können nach Verunreinigungen, z.B. durch Anteile an Feinststaub im Rohgas bzw. Abluftstrom, mittels einer Natronlauge ausgewaschen und wiederverwendet werden. Es entstehen keine Restbestandteile an verlagerten Schadstoffen.

Alle Steuer- und Regelungsaufgaben werden zentral durch eine Steuereinrichtung 24 wahrgenommen. Durch die Steuereinrichtung 24 werden die im Reaktionsgefäß benötigten Temperaturen überwacht und geregelt, es wird die wäßrige Lösung 22 geregelt in den Düsenstock 12 eingespeist, ebenso erfolgt die Eingabe eines Luft- oder Sauerstoff-Ozongemisches in den Düsenstock 12 über die Steuereinrichtung 24. Die Einspeisung wird so geregelt, daß kein überschüssiges Ozon anfällt und die gesamte Ozonmenge zur Oxidation verbraucht wird.

Das Verfahren ist zur Entfernung von Luftverunreinigungen insbesondere aus den Gruppen der Kohlenwasserstoffe, z.B. Benzine, Toliol, Xylol, der Aldehyde, wie z.B. Acetalaldehyd, Furfurol, der Äther, wie z.B. Äthylglykol, der Ester, wie z.B. Methylacetat, der Halogene-Kohlen-Wasserstoffverbindungen, z.B. Tetrachloräthan, von Formaldehyd u.a., geeignet. Das Verfahren beseitigt zuverlässig öl- und fetthaltige Emulsionen sowie Geruchsemissionen.

Verunreinigungen aus den Gruppen der Ketone, bestimmte Amine, Nitro- und Schwefelverbindungen können nicht ohne weiteres entfernt werden, insbesondere bei Aceton besteht die Gefahr der Bildung von nitrosen Gasen beim Zusammenbringen mit Wasserstoffperoxid.

Eine weitere Vorrichtung zur Durchführung des erfindungsgemäßen Verfahrens besteht gemäß der Figur 2 aus einem beheizbaren Reaktionsgefäß 1 mit angeflanschtem Kegel 32, wobei dieser Kegel 32 eine Abschleusvorrichtung 13 für möglicherweise auftretende Schlämme umfaßt.

In das Reaktionsgefäß 1 wird mit Schadstoffen beladenes Rohgas über eine Einlaßleitung 8 eingeleitet. An die Einlaßleitung 8 schließt sich eine Verteilerkammer 29 an, aus der das Rohgas in das Innere des Reaktionsgefäßes 1 austritt.

Im Bereich dieser Verteilerkammer 29 sind zwei Zuleitungen angeordnet, wobei über eine Zuleitung 33 Ozon in das Reaktionsgefäß 1 eingeleitet wird. Das Ozon kann beispielsweise aus einem Ozonbereiter 27 über die Zuleitung 33 in das Reaktionsgefäß 1 geleitet werden. Weiterhin ist eine Zuleitung 34 vorgesehen, wobei aus einem Vorratsbehälter 35 trockener Sauerstoff über die Zuleitung 34 in den Bereich der Verteilerkammer 29 geleitet wird. Eine Steuereinrichtung 36 mit einem Sensor, der in den Bereich der Verteilerkammer 29 ragt, überwacht die Zusammensetzung des Gasgemisches aus schadstoffbeladener Luft, Ozon und Sauerstoff und stellt gegebenenfalls über entsprechende Dosiereinrichtungen in den jeweiligen Zuleitungen 8,33 und 34 die optimale Zusammensetzung des Gasgemisches ein.

Das Gasgemisch steigt innerhalb des Reaktionsgefäßes 1 auf, wobei ein zu rascher Aufstieg gegebenenfalls durch eine Prallplatte 37 verändert werden kann, so daß im Bereich der Verteilerkammer 29 und etwas oberhalb davon ausreichend Gelegenheit für die drei beteiligten Anteile besteht, durch Verwirbelungen ein möglichst homogenes Gasgemisch zu bilden. In diesem Bereich erfolgt bzw. beginnt die Oxidation der Schadstoffe.

Als nächstes gelangt das Gasgemisch in einen Bereich 38 des Reaktionsgefäßes 1, in dem Prallkörper bzw. Füllkörperanteile, beispielsweise geblasene oder geblähte Glasfüllkörper, vorhanden sind. Oberhalb dieses Bereiches schließt sich ein Bereich 39 an, in dem in einem entsprechenden Aufnahmekorb Polymeranteile vorhanden sind. Diese Packung sorgt für die Absorbtion von Restsubstanzen von den Schadstoffen.

Mittels einer Bypaßleitung kann der Reaktionsbehälter 1 mit Hilfe eines Heizluftgebläses auf eine gewünschte oder erforderliche Reaktionstemperatur gebracht und auf dieser Temperatur konstant gehalten werden. Alternativ dazu können eingebaute Heizpatronen die Reaktionstemperatur aufbauen und sichern.

Bei bestimmten chemischen Gemischen, beispielsweise bei Styrolgasen im Abluftvolumen, kann die dargestellte Anlage auch auf Basis einer wäßrigen chemischen Reaktion betrieben werden. Dabei kann der Boden des Reaktionsbehälters 1, also der Bereich des Kegels 32, als Vorratsbehälter für eine Waschflüssigkeit dienen, die ständig umgewälzt wird. Dabei können sich mögliche Schlammanteile absetzen, anlagern und anschließend abgeschleust werden. Durch eine Steuereinrichtung 40 mit einem Sensor, der sich in den Bereich der Waschflüssigkeit erstreckt, wird die Temperatur der wäßrigen chemischen Lösung kontrolliert und gegebenenfalls eingestellt.

Über eine Steigleitung 41 wird Waschflüssigkeit aus dem Vorratsbereich, also aus dem Bereich des Kegels 32, abgezogen und nach oben in den Bereich 38 des Reaktionsgefäßes 1 gefördert. Dort, also im Bereich der Füllkörper aus geblasenem Glas, ergibt sich eine Sprühzone für die wäßrige Lösung. Dadurch wird der schadstoffbeladene Luftstrom auf einer sehr großen Fläche im Kontakt zur Lösung gebracht. Er kann hier reagieren und oxidieren.
Wenn bestimmte Zeolith-Granulate verwendet werden, können viele organische Verbindungen adsorptiv bzw. absorptiv gebunden werden, die von Mineralöl-Kohlenwasserstoffen abgeleitet sind, wie z.B. Lösungsmittel. So kann beispielsweise ein Zeolith-Kalk-Gebinde bis zum Zehnfachen seines Eigengewichtes an entsprechenden Kontaminanten aufnehmen.

Da mit ansteigender Beladung eine allmähliche Verkrustung dieser Granulatanteile erfolgt, kann bei bestimmten Lösungsmitteln, wie beispielsweise bei Essig oder bei Benzin, ein Gemisch aus dem entsprechenden Zeolith-Kalk und einem großvolumigen Mineralstoff, wie z.B. geblähtem Glas, Blähton oder Braunkohlenkoks eingesetzt werden, um eine Blockierung des Abluftstromes zu vermeiden.

Weiterhin kann das zu behandelnde Gas mit der an Ozon angereicherten Luft oder mit dem an Ozon angereicherten Sauerstoff in einen Verwirbelungsreaktor geführt werden, wobei gegebenenfalls andere Flüssigkeiten in Dampfform wie beispielsweise Wasserdampf, hinzugefügt werden.

Bei der Anwendung ozonhaltiger Gemische kann überschüssiges Ozon anschließend zerstört werden, wie z.B. durch Einstrahlung von UV-Licht mit einer geeigneten Wellenlänge. Alternativ hierzu kann ein Aktiv-Kohlefilter vorgesehen sein, an welchem sich das Ozon zersetzt. Dabei kann die Aktivkohle beispielsweise mit den Zeolith-Kalk-Anteilen vermengt werden.

Durch die Steuereinrichtung 36 kann jedoch auch eine Ozoneinspeisung so kontrolliert werden, daß kein überschüssiges Ozon anfällt und die gesamte Ozonmenge zur Oxidation verbraucht wird.

An das mit der Fig.2 beschriebene Reaktionsgefäß 1 kann sich ein Reinigungsbehälter 42 anschließen, wobei das vorgereinigte Rohgas über eine Leitung 43 vom Reaktionsgefäß 1 zum Reinigungsbehälter 42 geleitet wird. Am Ende dieser Leitung 43 sind innerhalb des Reinigungsbehälters 42 Verteilerdüsen 44 vorgesehen, durch die das vorgereinigte Rohgas in den Reinigungsbehälter 42 einströmt.

Oberhalb dieser Verteilerdüsen 44 ist ein Bereich 45 mit Granulat vorgesehen, wobei oberhalb dieses Bereiches 45 ein Bereich 46 mit einer Polymer-Aktivkohlefüllung vorgesehen ist, wobei in diesem Bereich die Zeolith-Kalkgebinde, gegebenenfalls vermischt mit Aktivkohle, vorgesehen sind. Das endgültig gereinigte Gas verläßt den Reinigungsbehälter 42 über eine Reingasleitung in Form einer Auslaßleitung 47.

### BEZUGSZEICHENLISTE

- 1: Reaktionsgefäß
- 2: unterer Bereich
- 3: mittlerer Bereich
- 4: oberer Bereich
- 5: Auskleidung
- 6: Saugleitung
- 7: Saugleitung
- 8: Einlaßleitung
- 9: Heizeinrichtung
- 10: Füllkörper
- 11: Siebblech
- 12: Düsenstock
- 13: Abschleusung
- 14: Tropfenabscheideraum
- 15: Heizeinrichtung
- 16: Verteilerboden
- 17: Schlammfangboden
- 18: Filteranlage
- 19: Füllstutzen
- 20: Leitung
- 21: Kreiselpumpe
- 22: wäßrige Lösung
- 23: Zuleitung
- 24: Steuereinrichtung
- 25: Ventilator
- 26: Reingasleitung
- 27: Ozongaserzeuger
- 28: Sauerstoff-Zuleitung
- 29: Verteilerkammer
- 30: Schüttung
- 31: Schlammauffangbecken
- 32: Kegel
- 33: Zuleitung
- 34: Zuleitung
- 35: Vorratsbehälter
- 36: Steuereinrichtung
- 37: Prallplatte
- 38: Bereich
- 39: Bereich
- 40: Steuereinrichtung
- 41: Steigleitung
- 42: Reinigungsbehälter
- 43: Leitung
- 44: Verteilerdüsen
- 45: Bereich
- 46: Bereich
- 47: Auslaßleitung

## Patentansprüche

1. Verfahren zum Reinigen von Luft, wobei verunreinigte Luft mit einer in Abhängigkeit von den zu entfernenden Kontaminanten reaktiven Flüssigkeit und/oder mit oxidierenden Gasanteilen sowie mit Katalysatoren in Kontakt gebracht wird,
**dadurch gekennzeichnet,** daß die verunreinigte Luft über Verteilereinrichtungen (11) durch eine Schüttung aus speziellen Zeolithgranulaten (10) geleitet wird, in die ein geregeltes Gemisch aus Wasserstoffperoxid und entsalzenem Wasser eingespeist wird, wobei durch aus den Zeolithgranulaten (10) ausgegasten Wasserstoffperoxid und Ozon die Oxidation der Schadstoffanteile in der Luft verstärkt wird.

2. Verfahren nach Anspruch 1, dadurch gekennzeichnet, daß die vorgereinigte Luft anschließend über bekannte Filter, z.B. Aktivkohlefilter, geführt wird.

3. Verfahren nach Anspruch 1, dadurch gekennzeichnet, daß zusätzlich Ozon als Oxidationsmittel geregelt in die Schüttung (10) geleitet wird.

4. Verfahren nach Anspruch 1, dadurch gekennzeichnet, daß die Zeolithgranulate (10) an der Oberfläche feine Poren und Grate aufweisen.

5. Verfahren nach den Ansprüchen 1 und 4, dadurch gekennzeichnet, daß die Zeolithgranulate (10) eine Größe zwischen 3 mm und 30 mm Durchmesser aufweisen.

6. Verfahren nach den Ansprüchen 1,4 und 5, dadurch gekennzeichnet, daß die Schüttung aus Zeolithgranulaten (10) zwischen 200 mm und 600 mm gewählt ist.

7. Verfahren nach Anspruch 1, dadurch gekennzeichnet, daß das Wasserstoffperoxid anteilig mit 14 % bis 18 % als wäßrige Lösung versprüht wird.

8. Verfahren nach Anspruch 1, dadurch gekennzeichnet, daß anstelle von Wasserstoffperoxid ein Alkalimetallperoxid, wie Natriumchlorit, Natriumperborat, Natriumperxaborat, Dioxon 104, verwendet wird.

9. Verfahren nach Anspruch 1, dadurch gekennzeichnet, daß eine Oxidation der Kontaminanten zusätzlich oder nur in saurem und basischem Milieu, beispielsweise in Schwefelsäure, Salzsäure, Salpetersäure, Phosphorsäure oder in Gemischen aus diesen, durchgeführt wird.

10. Verfahren nach Anspruch 9, dadurch gekennzeichnet, daß die Schwefelsäure in Konzentrationsgraden von 20 % bis 70 % verwendet wird.

11. Verfahren nach den Ansprüchen 9 und 10, dadurch gekennzeichnet, daß die Reaktionstemperatur auf nahe 40 ° C eingestellt wird.

12. Verfahren nach einem der Ansprüche 9 bis 11, dadurch gekennzeichnet, daß in die Luft mit Ozon angereicherter Sauerstoff eingespeist wird.

13. Vorrichtung zum Reinigen von Luft, dadurch gekennzeichnet, daß ein Reaktionsgefäß (1) mit einem Einlaß (6) für die verunreinigte Luft im unteren Bereich (2) und einem Auslaß (20) für die gereinigte Luft im oberen Bereich (4) sowie mit einem oberhalb des Einlasses (6) angeordneten mittleren Bereich (3) vorgesehen ist, in dem eine Zeolithgranulat-Schüttung (10) auf Verteilern (11) angeordnet ist, wobei mit der Schüttung (10) Zuführungen (12) für eine wäßrige Lösung aus Wasserstoffperoxid und entsalzenem Wasser und/oder für Ozon verbunden sind.

14. Vorrichtung nach Anspruch 13, dadurch gekennzeichnet, daß der untere Bereich (2) des Reaktionsgefässes (1) eine Auskleidung (5) aus Nickel von hohem Reinheitsgrad ohne Chromanteile und/oder mit einer keramischen Substanz aufweist.
